# EUROPÄISCHE PATENTSCHRIFT

(11) **EP 2 248 760 B1**
(45) Veröffentlichungstag und Bekanntmachung des Hinweises auf die Patenterteilung: **07.07.2021**
(21) Anmeldenummer: 10004685.3
(22) Anmeldetag: 04.05.2010
(51) Int. Cl.: B67D 7/04, B25J 5/02, B25J 17/02

(54) **Verfahren und Vorrichtung zur Befüllung von Baugruppen mit Betriebsstoffen an Fertigungslinien der Automobilindustrie**
Method and device for filling components with supplies on automobile industry production lines
Procédé et dispositif de remplissage de composants avec des substances de fonctionnement sur des lignes de fabrication de l'industrie automobile

(30) Priorität: 05.05.2009 DE 102009020312
(43) Veröffentlichungstag der Anmeldung: 10.11.2010
(73) Patentinhaber: Dürr Somac GmbH, 09366 Stollberg (DE)
(72) Erfinder: Neubert, Dieter, 09427 Ehrenfriedersdorf (DE); Geilert, Bernd, 09573 Augustusburg (DE); Kämmer, Guido, 09648 Mittweida (DE)
(74) Vertreter: Findeisen, Andreas

(56) Entgegenhaltungen:
- EP-A2- 0 418 744
- WO-A1-01/40108
- JP-A- S60 148 496
- Sterling Fluid Systems Group - Sterling SAT / Sterling PCU: "Automotive Filling & Testing Systems" 16. April 2009 (2009-04-16), XP002594810 Gefunden im Internet: URL:http://www.filling-testing.com/pdf/de_ de/Imagebroschuere.pdf [gefunden am 2010-07-29]
- Sterling Filling & Testing Division - Sterling SAT / Sterling PCU: "Technische Kompetenz, Innovation und Zuverlässigkeit für die Automobilindustrie" 16. April 2009 (2009-04-16), XP002594811 Gefunden im Internet: URL:http://www.filling-testing.com/pdf/de_ de/Produktuebersicht_Sterling_SAT.pdf [gefunden am 2010-07-29]

## Beschreibung

Die Erfindung betrifft ein Verfahren und eine Vorrichtung zur Befüllung von Baugruppen mit Betriebsstoffen an Fertigungslinien der Automobilindustrie, wobei das jeweilige Fahrzeug entlang der Fertigungslinie geführt und während dieser Bewegung unter Verwendung von mindestens einem Befülladapter befüllt wird.

Für zahlreiche technische Anwendungen müssen Behälter mit Flüssigkeiten oder Gasen gefüllt werden. Ein diesbezüglich typisches Anwendungsgebiet sind Fertigungslinien in der Automobilindustrie, an denen eine Erstbefüllung von Gehäusen, Ausgleichbehältern und ähnlichen Fahrzeugbaugruppen mit Kraft-, Schmier-, Kühl- und sonstigen Betriebsstoffen erfolgt. Für den Befüllvorgang wird die jeweilige Baugruppe temporär mit einem Adapter verbunden, über den das entsprechende Medium zugeführt wird. Derartige Befülladapter sind in verschiedenartigen Ausführungen bekannt.

So beschreibt GB 2 002 720 A einen Adapter für Kraftstoff, der an seiner Stirnfläche mit Sensoren ausgestattet ist, die mit einer Befüllleitung in Wirkverbindung stehen. Somit ist eine Befüllung nur möglich, sofern der Austrittsquerschnitt des Adapters vollflächig am Einfüllstutzen vom Fahrzeug anliegt.

Aus US 4 109 686 A ist ein Adapter zur Befüllung von Kraftfahrzeugbaugruppen bekannt, der an seiner Stirnfläche Vorsprünge aufweist, die mit hierzu kongruenten Ausnehmungen an der zu befüllenden Baugruppe in Wirkverbindung gebracht werden. Der Adapter wird zunächst mit den Vorsprüngen in die Ausnehmungen eingesetzt und danach verdreht.

In DE 28 48 434 C2 wird ein weiterer Befülladapter beschrieben, der ein Gehäuse mit einem axial verlaufenden Füllrohr für das in einen Einfüllstutzen einer zugeordneten Baugruppe einzufüllende Medium aufweist. Der jeweilige Betriebsstoff wird über Schläuche oder ähnliche Leitungen zugeführt und strömt im Innenraum des Gehäuses über Kanalstrukturen zum Füllrohr. Am Gehäuse sind schwenkbewegliche Spannklauen abgestützt, die mit Ausnehmungen am Einfüllstutzen in Wirkverbindung gebracht werden.

Die JP S 60 148496 A zeigt einen Industrieroboter mit einer Greiferhand die zum Befüllen eines Fahrzeugs einen Befülladapter ergreift.

Unabhängig von der jeweils konkreten Ausführung der Befülladapter sind für die Befüllung an Fertigungslinien der Automobilindustrie bisher zwei Varianten üblich:
a) Die Befülladapter werden nach beendetem Befüllvorgang vom Medienvorratsbehälter von Hand abgenommen und in einer Adapterablage der Verfahrkonsole abgelegt. Diese Handhabung muss ein Werker verrichten.
b) Die Befülladapter werden nach beendetem Befüllvorgang durch ein Handlingsystem in definierte Aufnahmen gezogen und in eine Transportposition gefahren. Hierbei ergeben sich Probleme, sofern mehrere unterschiedliche Befülladapter an mehreren unterschiedlichen Positionen eingesetzt werden müssen. Beispielsweise ist bei einem Einsatz von fünf verschiedenen Befülladaptern mit jeweils mehreren unterschiedlichen Positionen im Vorderwagen von sechs zu befüllenden Fahrzeugtypen eine konventionelle Zustellung im vorgegebenen Arbeitsbereich nicht möglich.

Die Broschüre "Automotive Filling & Testing Systems" der Sterling Fluid Systems Group - Sterling SAT / Sterling PCU (April 2009) beschreibt ein Verfahren zur Befüllung von Baugruppen mit Betriebsstoffen an Fertigungslinien der Automobilindustrie, wobei das jeweilige Fahrzeug entlang der Fertigungslinie geführt und während dieser Bewegung unter Verwendung von mindestens einem Befülladapter befüllt wird. Der Befülladapter wird nach der Befüllung durch einen Industrieroboter aus dem Bereich der zu befüllenden Baugruppe entnommen und nachfolgend in einer Adapterablage abgelegt.

Aufgabe der Erfindung ist es, eine technische Lösung zur Befüllung von Baugruppen mit Betriebsstoffen an Fertigungslinien der Automobilindustrie zu schaffen, die zur Handhabung mehrerer unterschiedlicher Befülladapter an mehreren unterschiedlichen Positionen geeignet ist und einen lediglich geringen manuellen Aufwand erfordert.

Diese Aufgabe wird mit den technischen Merkmalen des Anspruchs 1 gelöst.

Vorteilhafte Ausgestaltungen sind Gegenstand von Unteransprüchen, deren technische Merkmale in einem Ausführungsbeispiel näher beschrieben werden.

Gemäß der Erfindung wird vorgeschlagen, die Befülladapter mittels eines auf einer Achse geführten Industrieroboters mit einem speziellen Ausgleichsgreifer nach der Befüllung zu entnehmen und diese in einer Adapterablage abzulegen. Um diesen Verfahrensablauf realisieren zu können, weist das Entnahmesystem im Wesentlichen folgenden Aufbau auf:
Um Befülladapter aus einem, sich mit dem Montageband bewegenden Fahrzeug entnehmen zu können, müssen mehrere Verfahrbaugruppen so gesteuert werden, dass sie synchron laufen. Dadurch wird gewährleistet, dass die Greifpositionen erreicht werden und eine Kollision des Industrieroboters mit dem Fahrzeug vermieden wird. Dabei wird eine Verbindung zwischen einem Vorderrad des zu befüllenden Fahrzeuges und der Verfahrkonsole einerseits sowie dem Verfahrschlitten der Roboterachse (mit dem Industrieroboter) und der Verfahrkonsole andererseits hergestellt. Diese Verbindungen sind mit jeweils einem Messsystem ausgerüstet, so dass die Elemente nicht starr verbunden sind, sondern eigene Antriebe besitzen, die entsprechend synchronisiert und überwacht werden.

Durch Toleranzen im Fahrzeug und im Gesamtsystem wird die Position der zu entnehmenden Befülladapter von der Sollposition im mm- Bereich abweichen. Damit beim Abnehmen der Befülladapter von den Vorratsbehältern eine Leichtgängigkeit erreicht wird, wird der Befülladapter mit einem Greifelement versehen und der Greifer selbst derart konstruiert, dass sich bei der Greifbewegung ein Ausgleichsmechanismus in Gang setzt, mit dem ein Winkel- und/oder Achsversatz ausgeglichen werden kann. Vor einer Ablage des Befülladapters wird dieser Ausgleichsmechanismus in die Null-Position versetzt.

Als wesentliche Vorteile der erfindungsgemäßen technischen Lösung sind zu nennen:
Der Entfall eines mechanischen Zuführsystems verbessert die Zugänglichkeit beim Adaptieren der Befülladapter im Fahrzeug. Weiterhin ist die Integration neuer Befülladapter problemlos möglich. Ferner sind Behälterpositionen im Änderungsfall schnell zu integrieren. Außerdem ist diese Standardlösung mit Robotersystem bezüglich der Instandhaltung und Wartung einfacher zu organisieren als eine Sonderlösung. Schließlich kann ein Werker für andere Aufgaben freigesetzt werden.

Ein Ausführungsbeispiel der Erfindung ist in der Zeichnung dargestellt und wird nachfolgend beschrieben. Es zeigen:
- Fig. 1: den grundsätzlichen Aufbau einer erfindungsgemäßen Vorrichtung zur Befüllung in Seitenansicht
- Fig. 2: die in Fig. 1 gezeigte Vorrichtung in der Vorderansicht
- Fig. 3: eine Variante eines Befülladapters mit Greifelement

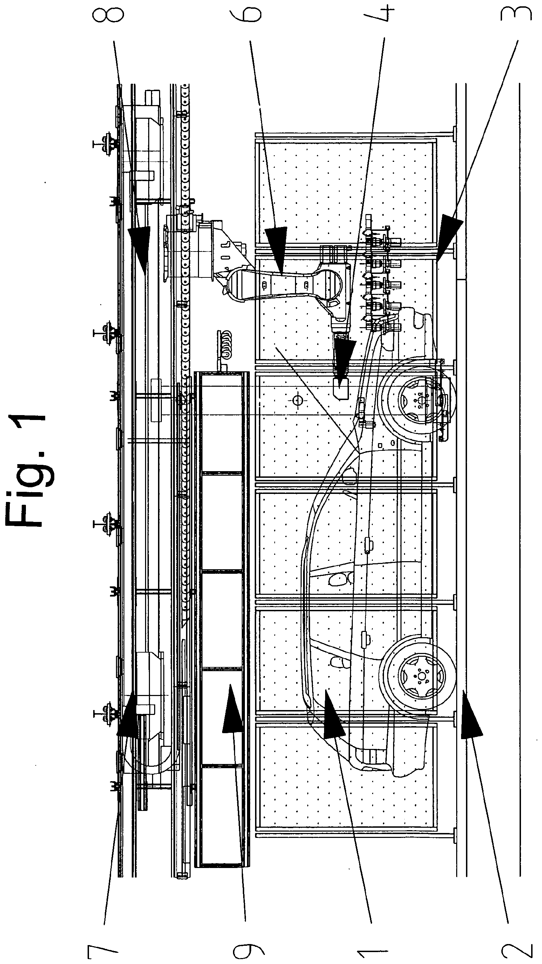

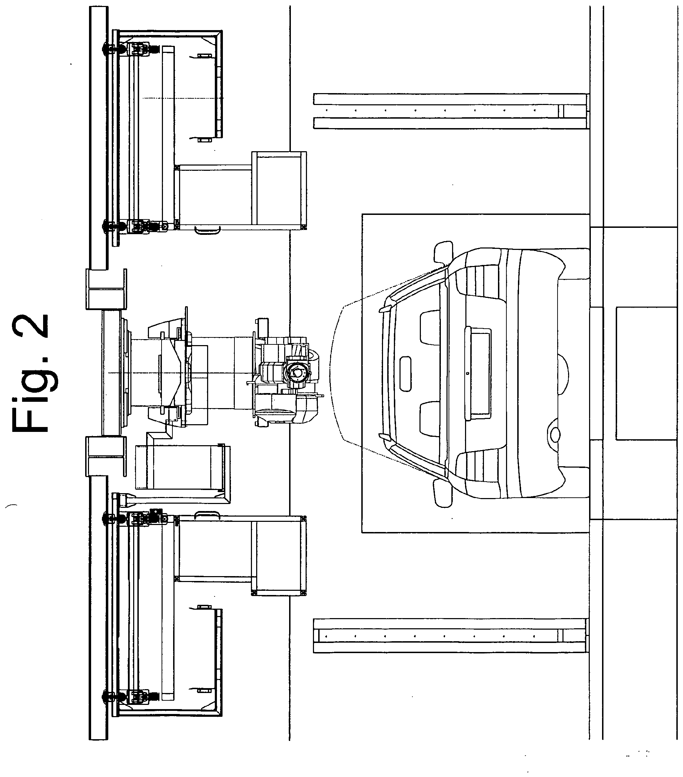

Fig. 1 und Fig. 2 zeigen in zwei Ansichten eine erfindungsgemäße Vorrichtung, die vorzugsweise zur Erstbefüllung von Gehäusen, Ausgleichbehältern und ähnlichen Fahrzeugbaugruppen mit Kraft-, Schmier-, Kühl- und sonstigen Betriebsstoffen an Fertigungslinien der Automobilindustrie konzipiert ist. Das jeweilige Fahrzeug 1 wird entlang der Fertigungslinie geführt und während dieser Bewegung unter Verwendung von mindestens einem Befülladapter befüllt. Der Aufbau einer solchen Fertigungslinie mit Transportsystem 2, Schutzzaun 3, Werkzeugen 4 und weiteren Baugruppen ist an sich bekannt, so dass auf nähere diesbezügliche Darlegungen verzichtet werden kann.

Zur Befüllung einer Baugruppe wird der zu befüllenden Baugruppe zunächst ein Befülladapter 5 zugeordnet. Dies erfolgt vorzugsweise manuell durch einen Werker. Danach erfolgt eine automatische Befüllung. Nach Abschluss dieser Befüllung wird gemäß der Erfindung der mindestens eine Befülladapter 5 mittels eines Industrieroboters 6 aus dem Anschlussbereich der zu befüllenden Baugruppe entnommen und nachfolgend in einer Adapterablage abgelegt, wobei eine solche Ablage in der Zeichnung nicht näher dargestellt ist.

Hierfür umfasst die Vorrichtung ein Schienensystem 7 mit einer Verfahrachse 8 und einer Verfahrkonsole 9. An der Verfahrachse 8 wird der Industrieroboter 6 geführt. Die Verfahrkonsolen 9 hängen und verfahren im Schienensystem 7, das an einem Stahlbau befestigt ist. Die Verfahrachse 8 hängt am gleichen Stahlbau wie das Schienensystem 7 und bewegt einen Schlitten, an dem der Industrieroboter 6 befestigt ist.

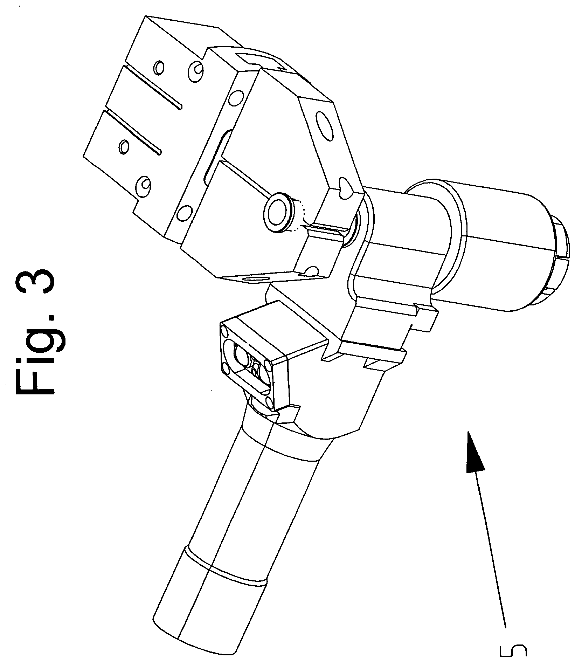

Der Industrieroboter 6 weist einen Ausgleichsgreifer auf, der mit einem am Befülladapter 5 ausgestalteten Greifelement in Wirkverbindung bringbar ist. Fig. 3 zeigt lediglich beispielsweise eine entsprechende Ausführung, wobei der Ausgleichsgreifer und das Greifelement unter Beachtung der jeweils konkreten Einsatzbedingungen verschiedenartig ausgestaltet werden können. Unabhängig von der konkreten Variante werden der Ausgleichsgreifer und das Greifelement jedoch derart ausgestaltet, dass während der Greifbewegung ein Ausgleichsmechanismus auslösbar ist, der einen Winkel- und/oder Achsversatz ausgleichen kann. Dieser Ausgleichsmechanismus wird vor der Ablage des Befülladapters in eine definierte NULL- Position versetzt.

Zwischen einem Vorderrad des entlang der Fertigungslinie geführten Fahrzeuges 1 und der Verfahrkonsole 9 sowie zwischen dem Verfahrschlitten der Roboterachse 8 mit dem Industrieroboter 6 und der Verfahrkonsole 9 ist jeweils eine Verbindung ausgestaltet. Die Verbindungen sind mit jeweils einem Messsystem ausgestattet, wobei diesen Elementen jeweils eigene Antriebe zugeordnet sind. Diese Antriebe werden zueinander synchronisiert betrieben und überwacht.

### Bezugszeichenliste

- 1: Fahrzeug
- 2: Transportsystem
- 3: Schutzzaun
- 4: Werkzeug
- 5: Befülladapter
- 6: Industrieroboter
- 7: Schienensystem
- 8: Verfahrachse
- 9: Verfahrkonsole

## Patentansprüche

1. Vorrichtung zur Ausstattung von Fertigungslinien der Automobilindustrie, wobei ein Fahrzeug (1) entlang der Fertigungslinie geführt und während dieser Bewegung unter Verwendung von mindestens einem Befülladapter (5) befüllt wird und wobei der mindestens eine Befülladapter (5) nach der Befüllung mittels eines Industrieroboters (6) aus dem Anschlussbereich der zu befüllenden Baugruppe entnommen und nachfolgend in einer Adapterablage abgelegt wird, wobei die Vorrichtung ein Schienensystem (7) mit einer Verfahrachse (8) und einer Verfahrkonsole (9) umfasst, wobei an der Verfahrachse (8) ein Industrieroboter (6) geführt wird, der einen Greifer aufweist, **dadurch gekennzeichnet, dass** der Greifer als ein Ausgleichsgreifer ausgeführt ist, der mit einem am Befülladapter (5) ausgestalteten Greifelement in Wirkverbindung bringbar ist, wobei der Ausgleichsgreifer und das Greifelement derart ausgestaltet sind, dass während der Greifbewegung ein Ausgleichsmechanismus auslösbar ist, der einen Winkel- und/oder Achsversatz zwischen dem Ausgleichsgreifers und dem Griffelement des Befülladapters (5) am Anschlussbereich der zu befüllenden Baugruppe ausgleichen kann und wobei der Ausgleichsmechanismus vor der Ablage des Befülladapters (5) in die Adapterablage in eine definierte NULL- Position versetzt wird.

2. Vorrichtung nach Anspruch 1, **dadurch gekennzeichnet,**
**dass** zwischen einem Vorderrad des entlang der Fertigungslinie geführten Fahrzeuges (1) und der Verfahrkonsole (9) sowie zwischen dem Verfahrschlitten der Roboterachse (8) mit dem Industrieroboter (6) und der Verfahrkonsole (9) jeweils eine Verbindung ausgestaltet ist.

3. Vorrichtung nach Anspruch 2, **dadurch gekennzeichnet,**
**dass** die Verbindungen zwischen dem Vorderrad und der Verfahrkonsole (9) sowie zwischen dem Verfahrschlitten und der Verfahrkonsole (9) mit jeweils einem Messsystem ausgestattet sind, wobei diesen Elementen jeweils eigene Antriebe zugeordnet sind.

4. Vorrichtung nach Anspruch 3, **dadurch gekennzeichnet,**
**dass** die Antriebe zueinander synchronisiert betrieben werden.

5. Vorrichtung nach Anspruch 3, **dadurch gekennzeichnet,**
**dass** den Antrieben Überwachungselemente zugeordnet sind.

## Claims

1. A device for equipping automobile industry production lines, wherein a vehicle (1) is guided along the production line and is filled during this movement by means of a filling adapter (5), and wherein the at least one filling adapter (5) is removed after filling from the connection area of the assembly to be filled using an industrial robot (6) and is then placed in an adapter tray, wherein the device comprises a rail system (7) having a traversing axis (8) and a traversing console (9), wherein an industrial robot (6) comprising a gripper is guided along the traversing axis (8), **characterized in that**
the gripper is configured as a compensating gripper which can be brought into an operative connection with a gripping element formed on the filling adapter (5), wherein the compensating gripper and the gripping element are configured such that a compensation mechanism can be triggered during the gripping movement which can compensate an angular and/or axial offset between the compensating gripper and the gripping element of the filling adapter (5) at the connection area of the assembly to be filled and wherein said compensation mechanism is brought into a defined ZERO position before the filling adapter (5) is placed in the adapter tray.

2. The device according to claim 1, **characterized in that**
a respective connection is implemented between a front wheel of a vehicle guided along the production line (1) and the traversing console (9) as well as between the traversing carriage of the robot axis (8) with the industrial robot (6) and the traversing console (9).

3. The device according to claim 2, **characterized in that**
the connections between the front wheel and the traversing console (9) as well as between the traversing carriage and the traversing console (9) are each equipped with a measuring system, wherein these elements are each associated with their own drives.

4. The device according to claim 3, **characterized in that**
the drives are operated in sync with each other.

5. The device according to claim 3, **characterized in that**
monitoring elements are associated with the drives.

## Revendications

1. Dispositif pour équiper des lignes de fabrication de l'industrie automobile, dans lequel un véhicule (1) est guidé le long de la ligne de fabrication et est rempli pendant ce mouvement à l'aide d'au moins un adaptateur de remplissage (5), et dans lequel l'adaptateur de remplissage (5) au nombre d'au moins un est retiré de la zone de contact de l'ensemble à remplir au moyen d'un robot industriel (6) après le remplissage et est ensuite déposé sur un plateau d'adaptateurs, le dispositif comprenant un système de rails (7) avec un axe de déplacement (8) et une console de déplacement (9), un robot industriel (6) étant guidé sur l'axe de déplacement (8) et ayant une pince **caractérisée en ce que** la pince est conçue comme une pince avec compensation qui peut être mise en liaison active avec un élément de préhension sur l'adaptateur de remplissage (5), la pince à compensation et l'élément de préhension étant conçus de telle manière qu'un mécanisme de compensation puisse être déclenché pendant le mouvement de préhension, capable de compenser un décalage angulaire et/ou axial entre la pince de compensation et l'élément de préhension de l'adaptateur de remplissage (5) dans la zone de contact de l'ensemble à remplir, et dans lequel le mécanisme de compensation est déplacé dans une position ZERO définie avant que l'adaptateur de remplissage (5) ne soit déposé sur le plateau d'adaptateurs.

2. Dispositif selon la revendication 1, **caractérisé en ce qu'**une liaison est formée respectivement entre une roue avant du véhicule (1) guidé le long de la ligne de production et la console de déplacement (9) et entre le chariot de déplacement de l'axe du robot (8) avec le robot industriel (6) et la console de déplacement (9).

3. Dispositif selon la revendication 2, **caractérisé en ce que** les liaisons entre la roue avant et la console de déplacement (9) et entre le chariot de déplacement et la console de déplacement (9) sont chacune équipées d'un système de mesure, ces éléments étant chacun dotés de leurs propres entraînements.

4. Dispositif selon la revendication 3, **caractérisé par le fait que** les entraînements fonctionnent en synchronisation les uns avec les autres.

5. Dispositif selon la revendication 3, **caractérisé en ce que** des éléments de surveillance sont affectés aux entraînements.
